Europäisches Patentamt

(19) European Patent Office

Office européen des brevets

(11) Numéro de publication: **0 076 732 B1**

(12) **FASCICULE DE BREVET EUROPEEN**

(45) Date de publication du fascicule du brevet:
12.12.84

(51) Int. Cl.³: **F 24 J 3/02, E 04 B 2/42, E 04 C 1/40**

(21) Numéro de dépôt: **82401745.3**

(22) Date de dépôt: **27.09.82**

(54) **Bloc de construction perfectionné à lame d'air ventilée.**

(30) Priorité: **30.09.81 FR 8118447**

(43) Date de publication de la demande:
**13.04.83 Bulletin 83/15**

(45) Mention de la délivrance du brevet:
**12.12.84 Bulletin 84/50**

(84) Etats contractants désignés:
**AT BE CH DE GB IT LI LU NL SE**

(56) Documents cités:
**AU - B - 82 231**
**DE - A - 1 088 691**
**DE - A - 2 514 440**
**DE - A - 2 928 482**
**FR - A - 526 395**
**FR - A - 2 306 410**

(73) Titulaire: **G B A, "Périsud" 4, rue François Ory, F-92128 Montrouge (FR)**

(72) Inventeur: **Albizzati, Max, 4, rue François Ory, F-92128 Montrouge (FR)**

(74) Mandataire: **Chameroy, Claude et al, c/o Cabinet Malemont 42, avenue du Président Wilson, F-75116 Paris (FR)**

BUNDESDRUCKEREI BERLIN

## Description

La présente invention concerne un bloc de construction perfectionné pour l'édification des murs extérieurs d'un bâtiment, par exemple une maison d'habitation ou tout autre volume clos, tel que locaux scolaires, bureaux, ateliers, etc. . .

Dans le domaine de la construction, la réduction de la consommation d'énergie et l'amélioration du confort intérieur font partie des préoccupations constantes des concepteurs.

L'amélioration du confort intérieur d'une maison passe par le renouvellement fréquent de l'air confiné dans ses pièces d'habitation. S'il n'est pas traité avant sa distribution à l'intérieur de la maison, l'air capté à l'extérieur est vecteur du froid, ce qui est préjudiciable tout à la fois au confort intérieur et aux économies d'énergie recherchées.

En conséquence, le préchauffage de l'air de renouvellement est indispensable. A cette fin, les techniques de chauffage solaire sont les solutions les plus économiques que l'on connaisse actuellement.

En vue de ce chauffage solaire de l'air de renouvellement, on réalise sur les murs des maisons, des façades dites »ventilées« captrices et convectrices de l'air extériewur, à partir de divers matériaux tels que le verre et l'acier. De telles réalisations présentent un inconvénient majeur qui réside dans le fait que l'assemblage de ces façades ventilées sur les ossatures porteuses est coûteux et difficile à effectuer.

La présente invention se propose de remédier à ces inconvénients. Elle a pour objet un bloc de construction perfectionné qui renferme un vide formé entre son corps et une paroi frontale captrice du rayonnement solaire destinée à constituer la face extérieure du mur, ce vide étant apte à communiquer avec le vide correspondant des blocs adjacents, de manière à permettre une circulation continue d'air tout au long de ladite face extérieure.

Dans la réalisation du problème selon l'invention, le vide du bloc de construction est constitué, dans sa partie basse, par un espace continu ouvert sur la face inférieure et au moins l'une des faces latérales du bloc et communiquant avec des passages effilés en direction de la face supérieure du bloc, qui débouchent sur cette dernière et sont délimités par des plots de liaison reliant la paroi frontale au corps du bloc.

On voit que grâce à l'invention, on dispose, pour réaliser une façade ventilée, de moyens directement intégrés aux blocs servant à la construction des murs extérieurs de la maison. Les problèmes rencontrés au cours du montage des façades ventilées classiques sur leur ossature porteuse sont donc écartés.

Cette conformation spécifique du vide formant la lame d'air ventilée favorise le mouvement ascensionnel de l'air et constitue un frein à son déplacement dans l'autre sens.

Avantageusement, les plots de liaison sont en nombre impair. Il en résulte un décalage d'un demi pas dans la répartition des plots de liaison qui, lorsque les blocs sont assemblés en quinconce selon des rangées superposées, conduit à un brassage de l'air et à un allongement de son trajet de circulation le soumettant à une exposition prolongée aux rayons solaires.

De préférence, la partie de la face supérieure du bloc dans laquelle débouchent les passages effilés est conformée selon une nervure légèrement surélevée du bloc et d'autres nervures parallèles à la première s'étendent sur la face supérieure du bloc.

Cette double disposition permet d'éviter que du mortier ou de la laitance ne pénètre dans le vide pendant l'assemblage des blocs tout en facilitant la mise à niveau horizontale des blocs les uns sur les autres.

Selon un mode de réalisation particulier de l'invention, le corps du bloc est percé de part en part d'au moins deux passages transversaux communiquant avec le vide formé entre sa paroi frontale et son corps. Des blocs de ce type sont prévus dans la dernière rangée de chaque étage pour faire passer l'air de la lame formée par les vides des blocs vers l'intérieur de l'habitation.

Un mode de réalisation de la présente invention va être décrit ci-après à titre d'exemple non-limitatif en référence aux dessins annexés dans lesquels:

— la figure 1 est une vue en perspective d'un bloc de construction selon l'invention dont la paroi frontale a été partiellement arrachée;

— la figure 2 est une vue en coupe effectuée selon la ligne II-II de la figure 1;

— la figure 3 est une vue en coupe effectuée selon la ligne III-III de la figure 2;

— les figures 4 et 5 sont des vues en coupe effectuées respectivement selon les lignes IV-IV et V—V de la figure 3;

— la figure 6 représente schématiquement un mur construit à l'aide de blocs selon l'invention; et

— les figures 7 et 8 sont des vues en coupe effectuées respectivement selon les lignes VII-VII et VIII-VIII de la figure 6.

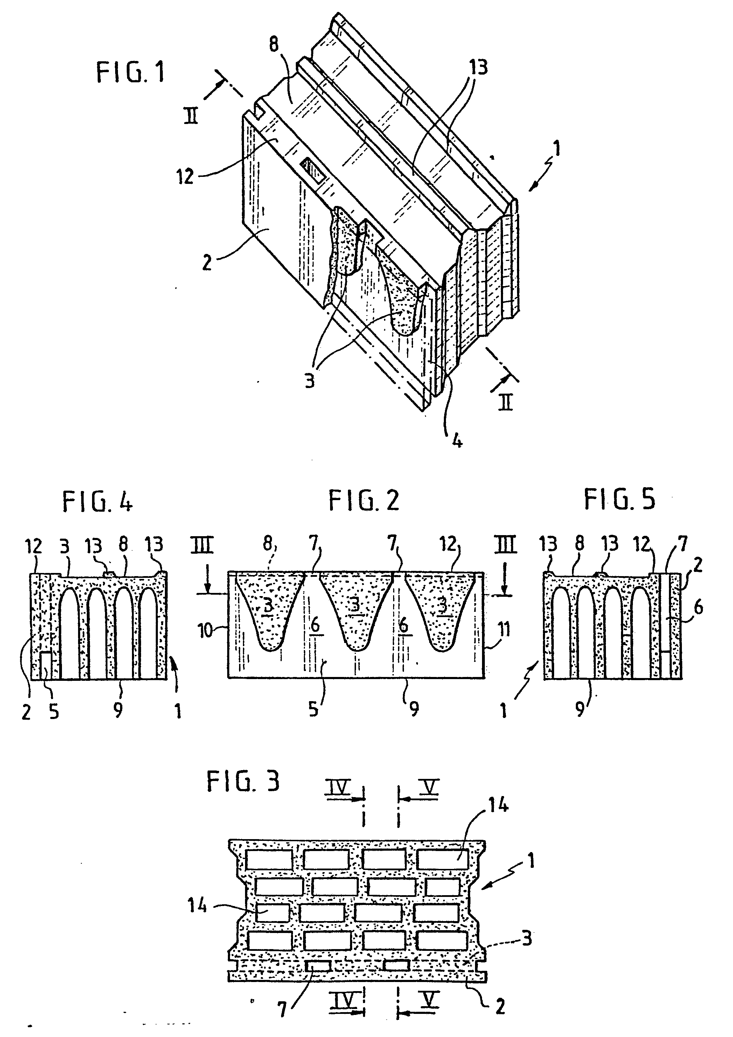

Comme on le voit sur la figure 1, le bloc de construction selon l'invention se compose essentiellement d'un corps 1 et d'une paroi frontale 2 reliée à ce dernier par des plots de liaison 3 pour délimiter un vide intérieur 4.

La paroi frontale 2 est destinée à être placée sur la face extérieure d'un mur construit à l'aide de blocs de ce type et est constituée en un matériau capteur des rayonnements solaires.

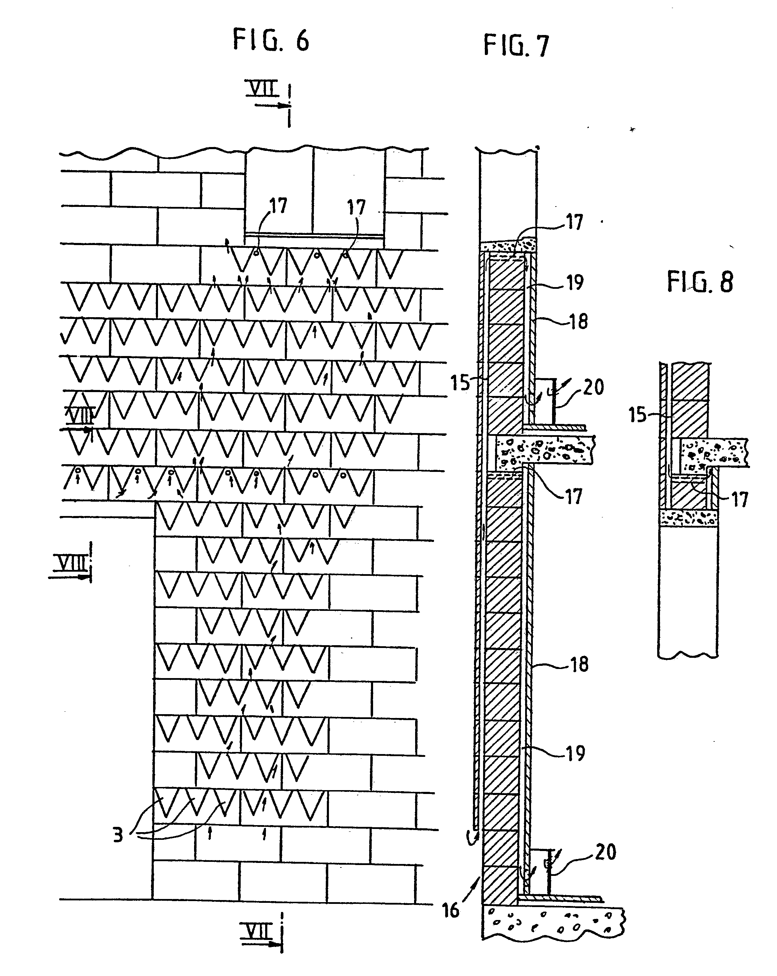

Les figures 2 et 5 montrent de manière plus précise la structure intérieure du bloc de construction selon l'invention.

Comme cela ressort de la figure 2, le vide intérieur 4 comprend dans sa partie basse un espace continu 5 qui communique avec des passages 6 délimités par les plots 3. Ces passages 6 débouchent par des ouvertures 7 sur la face supérieure 8 du bloc.

L'espace 5 pour sa part est ouvert sur la face inférieure 9 et les deux faces latérales 10 et 11 du bloc pour que le vide 4 puisse communiquer avec le vide correspondant des blocs adjacents de manière à permettre une circulation continue d'air tout le long de la face extérieure du mur. Toutefois, dans les blocs destinés à former les angles du mur, l'espace 5 est ouvert sur une seule face latérale.

On peut encore observer sur la figure 2 que les plots de liaison 3 sont conformés sensiblement selon des triangles présentant un sommet arrondi et des côtés inclinés légèrement rentrants, de façon à conférer aux passages 6 une forme effilée en direction de la face supérieure 8 du bloc. Comme on le comprendra aisément, cette forme effilée constitue un frein au mouvement descendant de l'air tout en favorisant son mouvement ascensionnel. Il est bien évident que les plots 3 peuvent avoir n'importe quelle autre configuration donnant aux passages 6 cette forme effilée.

Selon une caractéristique importante de l'invention, les plots 3 sont en nombre impair, trois dans le présent exemple. Cette disposition est prévue pour que, dans le mur construit à l'aide de blocs selon l'invention montés en quinconce les uns sur les autres, l'air se déplaçant dans les vides 4 soit soumis à un brassage et ait un trajet allongé réparti sur toute la face du mur.

Comme cela ressort plus précisément des figures 4 et 5, la partie de la face supérieure 8 du bloc, dans laquelle débouchent les passages 6 est constituée par une nervure légèrement surélevée 12 longeant le bord frontal de cette face supérieure. Cette nervure constitue une protection contre la pénétration dans le vide 4 de laitance ou de mortier au cours de la construction du mur. Deux autres nervures parallèles 13 sont également prévues sur la face supérieure du bloc afin de faciliter la mise à niveau horizontal du bloc supérieur sur le bloc inférieur.

La figure 3 montre que le corps 1 du bloc selon l'invention renferme des cavités 14. Ces cavités sont en fait destinées à recevoir des produits aptes à stocker des calories.

Pour être complet dans cette description, on ajoutera que le bloc selon l'invention peut être fabriqué à partir de toutes sortes de matériaux, tels que du béton cellulaire, du béton de gravillons de ponce, de la terre cuite, de la pierre etc.

Les figures 6 et 8 représentent un mur extérieur d'une maison d'habitation construit à partir de blocs de construction selon l'invention. Les blocs sont assemblés par rangées superposées en étant disposés en quinconce.

La figure 7 montre que lorsque cet assemblage est réalisé, les vides des blocs forment une lame d'air continue 15. On voit aussi que les blocs des deux rangées les plus proches du sol sont des blocs classiques sans paroi frontale afin de ménager une entrée 16 pour l'air.

La figure 6 illustre la manière dont l'air se déplace par convection à l'intérieur de cette lame 15. L'air est brassé et réparti sur toute la face du mur en bénéficiant ainsi d'une exposition prolongée aux rayonnements solaires en vue d'un préchauffage amélioré.

En revenant à la figure 7, on peut voir que le corps de chacun des blocs de la rangée supérieure de chaque étage est percé de part en part de deux passages transversaux 17 situés entre les trois plots de liaison et qui établissent une communication pour l'air préchauffé entre la lame 15 et l'intérieur des pièces d'habitation. Plus précisément, la face intérieure du mur porte dans chaque étage un panneau préfabriqué 18 ménageant avec elle un mince espace 19 communiquant par les passages 17 avec la lame d'air 15. A sa partie inférieure, cet espace est relié à un dispositif 20 d'aspiration et de diffusion de l'air préchauffé à l'intérieur de la pièce d'habitation.

Il convient ici de préciser que l'épaisseur que l'on donne à la lame d'air 15 est déterminée en fonction du débit et du volume d'air à transiter. Dans les cas les plus courants, cette épaisseur sera de 2 cms.

Outre le fait qu'il permet une captation solaire de bon niveau, le bloc de construction selon l'invention présente de bonnes qualités mécaniques et peut être obtenu par une fabrication industrialisée traditionnelle et donc de faible coût. En association avec un isolant, il récupère par ailleurs une partie importante des déperditions de chaleur dans les pièces d'habitation. Il permet donc de diminuer considérablement les besoins énergétiques de chauffage, tout en conservant des niveaux de renouvellement d'air compatibles avec le confort et la salubrité des locaux, mais également, et c'est là une nouveauté sur le plan de l'isolation, de lutter par simple inversion du flux d'air dans le mur, contre le froid ou le chaud de manière analogue et de maintenir ainsi un haut niveau de confort climatique sur l'ensemble de l'année. En conclusion, le bloc de construction selon l'invention est l'élément de base d'une véritable isolation dynamique garantissant un confort en toutes saisons.

## Revendications

1. Bloc de construction perfectionné pour l'édification des murs extérieurs d'un bâtiment, tel qu'une maison d'habitation, et renfermant un vide (4) formé entre son corps (1) et une paroi frontale (2) captrice du rayonnement solaire, appelée à constituer la face extérieure du mur, ce vide (4) étant destiné à communiquer avec le vide correspondant des blocs adjacents de manière à permettre une circulation continue d'air tout au long de ladite face extérieure, ce bloc de construction étant caractérisé en ce que le vide (4) est constitué, dans sa partie basse, par un espace continu (5) ouvert sur la face inférieure (9) et au moins l'une des faces latérales (10 ou 11) du bloc et communiquant avec des passages (6) effilés en direction de la face supérieure (8) du bloc, qui débouchent sur cette dernière et sont délimités par des plots de liaison (3) reliant la paroi frontale (2) au corps (1) du bloc.

2. Bloc de construction selon la revendication 1, caractérisé en ce que ledit espace continu (5) est ouvert sur les deux faces latérales (10, 11) du bloc.

3. Bloc de construction selon la revendication 1 ou 2 caractérisé en ce que les plots de liaison (3) ont une forme sensiblement triangulaire.

4. Bloc de construction selon l'une quelconque des revendications 1 à 3, caractérisé en ce que les plots de liaison (3) sont en nombre impair.

5. Bloc de construction selon l'une quelconque des revendications 1 à 4, caractérisé en ce que la partie de sa face supérieure (8) dans laquelle débouchent les passages effilés (6) est conformée selon une nervure (12) légèrement surélevée et en ce que d'autres nervures parallèles (13) à la première s'étendent sur la face supérieure (8) du bloc.

6. Bloc de construction selon l'une quelconque des revendications 1 à 5, caractérisé en ce que son corps (1) est percé de part en part d'au moins deux passages transversaux (17) communiquant avec le vide (4) formé entre sa paroi frontale (2) et son corps (1).

7. Bloc de construction selon l'une quelconque des revendications 1 à 6 caractérisé en ce que son corps (1) renferme des cavités (14) destinées à être remplies par un produit apte à stocker les calories.

## Patentansprüche

1. Verbesserter Baublock zum Errichten von Außenmauern eines Gebäudes, wie eines Wohnhauses, und mit einem zwischen seinem Körper (1) und einer Sonnenstrahlung einfangenden Vorderwand (2) gebildeten Hohlraum (4), dazu bestimmt, die Außenfläche der Mauer zu bilden, wobei dieser Hohlraum (4) bestimmungsgemäß mit dem entsprechenden Hohlraum benachbarter Blöcke so kommuniziert, daß eine kontinuierliche Luftzirkulation entlang der Außenfläche ermöglicht wird, wobei sich dieser Baublock dadurch auszeichnet, daß der Hohlraum (4) in seinem unteren Teil in einem durchgehenden Raum (5) besteht, der auf der Innenfläche (9) und wenigstens einer der Seitenflächen (10 oder 11) des Blocks offen ist und mit in Richtung der Oberfläche (8) des Blocks verjüngten Durchgängen (6) kommuniziert, die auf letzterer enden und durch Verbindungsklötze (3), die Vorderwand (2) mit dem Körper (1) des Blocks verbindend, begrenzt sind.

2. Baublock nach Anspruch 1, dadurch gekennzeichnet, daß der durchgehende Raum (5) auf den beiden Seitenflächen (10, 11) des Blocks geöffnet ist.

3. Baublock nach Anspruch 1 oder 2, dadurch gekennzeichnet, daß die Verbindungsklötze (3) eine im wesentlichen dreieckige Form haben.

4. Baublock nach einem der Ansprüche 1 bis 3, dadurch gekennzeichnet, daß die Verbindungsklötze (3) in ungerader Zahl sind.

5. Baublock nach einem der Ansprüche 1 bis 4, dadurch gekennzeichnet, daß der Teil seiner Oberfläche (8), in den die verjüngten Durchgänge (6) münden, gemäß einer leicht überhöhten Rippe (12) gebildet ist und daß sich weitere, zur ersten parallele Rippen (13) auf der Oberfläche (8) des Blocks erstrecken.

6. Baublock nach einem der Ansprüche 1 bis 5, dadurch gekennzeichnet, daß sein Körper (1) von wenigstens zwei Quergängen (17) durchbrochen ist, die mit dem zwischen seiner Vorderwand (2) und seinem Körper (1) gebildeten Hohlraum (4) kommunizieren.

7. Baublock nach einem der Ansprüche 1 bis 6, dadurch gekennzeichnet, daß sein Körper (1) Ausnehmungen (14) umfaßt, die dazu bestimmt sind, mit einem Produkt gefüllt zu werden, das geeignet ist, die Kalorien zu speichern.

## Claims

1. An improved construction block for building the external walls of a building such as a house, and comprising an empty space (4) formed between its body (1) and a front wall (2) collecting the solar radiation and intended to form the outer face of the wall, this empty space (4) being intended to communicate with the corresponding empty space of the adjacent blocks so as to allow a continuous air-flow all along said outer face, this construction block being characterized in that the empty space (4) is formed, in its low part, by a continuous space (5) open on the lower face (9) and at least one of the lateral faces (10 or 11) of the block and communicating with passages (6) tapering in the direction of the upper face (8) of the block, which open on to this latter and are defined by connecting studs (3) connecting the front wall (2) to the body (1) of the block.

2. Construction block according to claim 1, characterized in that said continuous space (5) is open on the two lateral faces (10, 11) of the block.

3. Construction block according to claim 1 or 2, characterized in that the connecting studs (3) have a substantially triangular shape.

4. Construction block according to any one of claims 1 to 3, characterized in that the connecting studs (3) are uneven in number.

5. Construction block according to any one of claims 1 to 4, characterized in that the part of its upper face (8) in which the tapering passages (6) open is shaped like a slightly raised rib (12) and in that other ribs (13) parallel to the first one extend over the upper face (8) of the block.

6. Construction block according to any one of claims 1 to 5, characterized in that its body (1) is pierced from one side to the other with at least two transverse passages (17) communicating with the empty space (4) formed between its front wall (2) and its body (1).

7. Construction block according to any one of claims 1 to 6, characterized in that its body (1) comprises cavities (14) intended to be filled with a product adapted for storing heat.

**FIG. 1**

**FIG. 4**

**FIG. 2**

**FIG. 5**

**FIG. 3**

FIG. 6  FIG. 7  FIG. 8